# EUROPÄISCHE PATENTSCHRIFT

(11) **EP 1 315 915 B1**
(45) Veröffentlichungstag und Bekanntmachung des Hinweises auf die Patenterteilung: **13.10.2004**
(21) Anmeldenummer: 01965064.7
(22) Anmeldetag: 05.07.2001
(51) Int. Cl.: F16D 25/08, B60K 23/02

(54) **VORRICHTUNG ZUR BEFESTIGUNG EINER HYDRAULISCHEN KUPPLUNGSBETÄTIGUNGSEINRICHTUNG, INSBESONDERE KUPPLUNGSNEHMERZYLINDER**
DEVICE FOR FIXING A HYDRAULIC CLUTCH ACTIVATING DEVICE, ESPECIALLY A CLUTCH SLAVE CYLINDER
DISPOSITIF DE FIXATION D'UN SYSTEME HYDRAULIQUE D'ACTIONNEMENT D'EMBRAYAGE, NOTAMMENT D'UN CYLINDRE RECEPTEUR D'EMBRAYAGE

(30) Priorität: 04.08.2000 DE 10038012
(43) Veröffentlichungstag der Anmeldung: 04.06.2003
(73) Patentinhaber: Dr.Ing. h.c.F. Porsche Aktiengesellschaft, 70435 Stuttgart (DE)
(72) Erfinder: SANDER, Edmund, 71229 Leonberg (DE); SEILER, Thomas, 71287 Weissach (DE)
(86) Internationale Anmeldenummer: PCT/EP2001/007694
(87) Internationale Veröffentlichungsnummer: WO 2002/012745

(56) Entgegenhaltungen:
- DE-A- 1 750 532
- FR-A- 2 785 357
- US-A- 3 182 443
- US-A- 4 516 748
- PATENT ABSTRACTS OF JAPAN vol. 012, no. 374 (M-749), 6. Oktober 1988 (1988-10-06) & JP 63 125829 A (HOWA MACH LTD), 30. Mai 1988 (1988-05-30)

## Beschreibung

Die Erfindung betrifft ein Getriebegehäuse mit einer hydraulischen Kupplungsbetätigungseinrichtung, insbesondere Kupplungsnehmerzylinder sowie einen Kupplungsnehmerzylinder gemäß den Merkmalen der Oberbegriffe der Hauptansprüche.

Zur Befestigung von derartigen Kupplungsbetätigungseinrichtungen ist es allgemein bekannt, seitlich am Ende des Zylinders einen Befestigungsflansch vorzusehen, über die der Kupplungsnehmerzylinder mit Hilfe von Befestigungsschrauben an einem Gehäuseteil der Brennkraftmaschine bzw. des Getriebes befestigt ist. Der Ein- bzw. Ausbau dieses hochbelasteten Bauteils gestaltet sich oft schwierig, da der freie Zugang zu den Befestigungsschrauben oft nicht möglich ist.

Aus der DE-AS 17 50 532 ist eine hydrostatische Kupplungsbetätigungseinrichtung bekannt, bei der der Nehmerzylinder zwischen dem Kupplungsausrückhebel und einem am Motorblock eingeschraubten Kugelkopfbolzen aufgehangen ist. Eine radiale Führung bzw. eine Absicherung gegen das Herausfallen des Kupplungsnehmerzylinders besteht nicht.

Aus der US - PS 3,182,443 ist weiterhin eine hydraulische Kupplungsbetätigungseinrichtung mit einem Nehmerzylinder nach den Oberbegriff des Anspruchs 10 bekannt, bei der die Druckstange des Nehmerzylinders nach außen hin durch eine Manschette abgedichtet ist, während am anderen Ende des Nehmerzylindergehäuses ein Befestigungsauge vorgesehen ist, mit dem der Nehmerzylinder an der Fahrzeugkarosserie befestigt ist.

In der US - PS 4,516,748 ist ein Kupplungszylinder nach den Oberbegriff des Anspruchs 1 dargestellt und beschrieben, der durch eine Art Clipsverbindung am Kupplungsgehäuse befestigt ist.

Es ist daher Aufgabe der Erfindung, die Befestigung eines Kupplungsnehmerzylinders dahingegend zu verbessern, dass er auf einfache Art und Weise im Getriebegehäuse einer Brennkraftmaschine montiert bzw. demontiert werden kann, während er gleichzeitig im eingebauten Zustand so befestigt ist, dass er sicher die von ihm aufgenommenen Betriebskräfte auf den Kupplungsausrückmechanismus weiterleiten kann.

Die Lösung der Aufgabe erfolgt durch die Merkmale der beiden Hauptansprüche.

Das erfindungsgemäße Getriebegehäuse bzw. der erfindungsgemäße Kupplungsnehmerzylinder zeichnen sich durch einen einfachen Aufbau aus, durch den eine einhändige Montage des Kupplungsnehmerzylinders in das Getriebegehäuse möglich ist. Die verliersichere Befestigung des Kupplungsnehmerzylinders am Gehäuse erfolgt nur noch mittels einer Befestigungsschraube, wobei u.a. aufgrund der im Kupplungsnehmerzylinder angeordneten Druckfeder eine selbsthaltende Montageposition erreicht wird. Während es sonst üblich ist, das offene Ende des Zylinders, durch das die Stößelstange geführt ist, beispielsweise mit zwei Befestigungsschrauben am Gehäuse der Brennkraftmaschine zu befestigen, ist bei der neuen Lösung lediglich eine radiale Führung innerhalb einer Öffnung im Getriebegehäuse vorgesehen. Dadurch, dass das andere Ende des Nehmerzylinders axial am Getriebegehäuse abgestützt wird, ist die an diesem Ende vorgesehene Befestigungsschraube betriebskräftefrei und dient somit lediglich der Sicherung des Nehmerzylinders am Getriebegehäuse der Brennkraftmaschine.

In den Unteransprüchen sind weitere vorteilhafte Ausgestaltungen und Verbesserungen des erfindungsgemäßen Getriebegehäuse sowie des erfindungsgemäßen Kupplungsnehmerzylinders enthalten.

Die das offene Ende des Nehmerzylinders abschließende und die Stößelstange umgebene elastische Manschette ist auf einem Flanschteil des Nehmerzylinders festgesetzt, so dass im eingebauten Zustand der über den Flansch gestülpte Abschnitt der Manschette mit seiner Außenseite an der Innenwandung der Getriebegehäuseöffnung anliegt. Damit wird in vorteilhafter Weise eine spielfreie radiale Aufnahme des Kupplungsnehmerzylinders im Getriebegehäuse erreicht.

Dadurch, dass der Ringabschnitt der Manschette torusförmig nach außen gewölbt ist, lässt sich der Kupplungsnehmerzylinder mit seiner Manschettenseite auf einfache Art und Weise schräg in die Öffnung des Getriebegehäuses einführen, um danach mit seinem hinteren Ende in die Befestigungsposition überführt bzw. verschwenkt zu werden. Erst in dieser Position wird zwischen der Innenwandung der Getriebegehäuseöffnung und dem torusförmigen Ringabschnitt der Manschette die maximale Anlagefläche erreicht, die eine sichere radiale Führung des Kupplungsnehmerzylinders gewährleistet.

Die auf der Innenseite des Ringabschnittes der Manschette vorgesehenen radialen Ausnehmungen erhöhen in vorteilhafter Weise die radiale Elastizität der zwischen Innenwandung der Getriebegehäuseöffnung und dem Kupplungsnehmergehäuse angeordneten Manschette.

Durch die an der Manschette vorgesehene Ringdichtlippe wird einerseits verhindert, dass Schmutzwasser o.ä. über die Getriebegehäuseöffnung in den Kupplungsraum eintreten kann. Andererseits wird durch die Federwirkung der sich axial an einer Aussenfläche der Getriebegehäuseöffnung abstützenden Ringdichtlippe eine selbsthaltende Endlageposition des Kupplungsnehmerzylinders erreicht.

Durch den am Zylinderende vorgesehenen Anschlag kann auf einfache Art und Weise der Kupplungsnehmerzylinder an einem Vorsprung des Getriebegehäuses eingespannt werden.

Ein Ausführungsbeispiel der Erfindung ist in der nachfolgenden Beschreibung und Zeichnung näher erläutert.

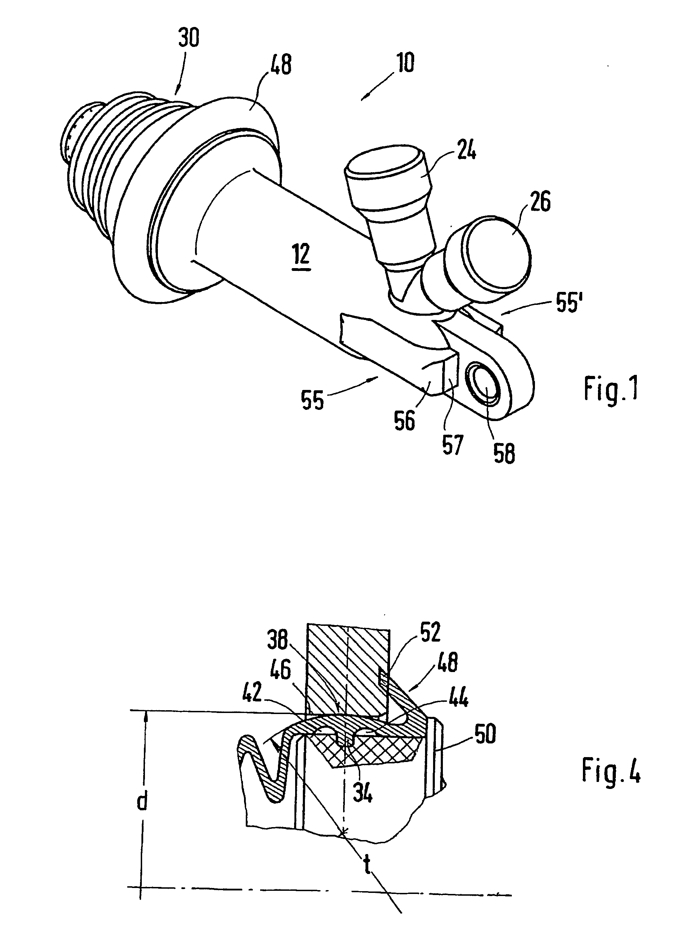

Es zeigen
- Fig. 1: Eine Perspektivansicht eines Kupplungsnehmerzylinders,
- Fig. 2: die Darstellung eines Kupplungsnehmerzylinders in einer Montageposition,
- Fig. 3: die Darstellung eines Kupplungsnehmerzylinders in einer montierten Endlageposition und
- Fig. 4: eine vergrößerte Ansicht vom Ausschnitt X in Figur 3.

### Beschreibung des Ausführungsbeispiels

Der Kupplungsnehmerzylinder 10 weist ein Zylindergehäuse 12 auf, in dem auf bekannte Art und Weise ein mit einer Stößelstange 14 versehener Kolben 16 angeordnet ist. Der Kolben 16 schließt auf der der Stößelstange 14 abgewandten Seite einen Druckraum 18 ab, in dem eine Druckfeder 20 angeordnet ist, die sich auf der einen Seite am Kolbenboden und auf der anderen Seite am geschlossenen Ende 22 des Zylindergehäuses 12 abstützt.

Am geschlossenen Ende 22 des Zylindergehäuses 12 sind zwei mit dem Druckraum 18 verbundene Anschlussstutzen 24 und 26 vorgesehen, wobei Anschlussstutzen 24 hydraulisch mit einem nicht dargestellten Geberzylinder verbunden ist, während im Stutzen 26 ein Entlüftungsventil für den Druckraum 18 integriert ist. Die Abdichtung des Druckraumes 18 gegenüber der mit der Stößelstange 14 verbundenen Seite des Kolbens 16 erfolgt auf bekannte Art und Weise zum Beispiel durch eine radial um den Kolben geführte Nutringmanschette (nicht dargestellt). Die axiale Bewegung des Kolbens bzw. der Stößelstange 14 zur Betätigung des Kupplungs- Ausrückhebels wird ebenfalls auf bekannte Art und Weise beispielsweise durch einen am offenen Ende 28 des Zylindergehäuses 12 befestigten Sicherungsring begrenzt.

Die Stößelstange 14 ist von einer elastischen Manschette, im folgenden als Faltenbalg 30 bezeichnet, umschlossen. Das mit dem größeren Durchmesser versehene Ende des Faltenbalgs 30 ist auf einem Flanschteil 32 des Zylindergehäuses 12 aufgesetzt, wobei als Verrutschsicherung ein am Faltenbalg 30 angeformter radialer Innensteg 34 in eine in die Flanschfläche 32 eingebrachte Ringnut eingreift. Das andere, mit dem kleineren Durchmesser versehene Ende des Faltenbalgs 30 wird am Ende der Stößelstange 14, das kugelförmig ausgebildet ist, von einer Blechkappe 36 umfasst. Der auf die Flanschfläche 32 aufgesetzte Ringabschnitt 38 ist nach außen gewölbt ausgebildet. Wie in Fig. 4 vergrößert dargestellt, weist der Ringabschnitt 38 einen torusförmig gekrümmten Abschnitt auf, der im vorliegenden Ausführungsbeispiel mit einem Durchmesser von t=30 mm ausgebildet ist, während der Durchmesser des rotationsymmetrisch ausgebildeten Ringabschnittes 38 mit einem Durchmesser von d=45 mm versehen ist. Dieser torusförmig gekrümmte Abschnitt ist, wie später noch näher beschrieben, für den Einbau des Kupplungsnehmerzylinders 10 in einem Getriebegehäuse 40 von Bedeutung.

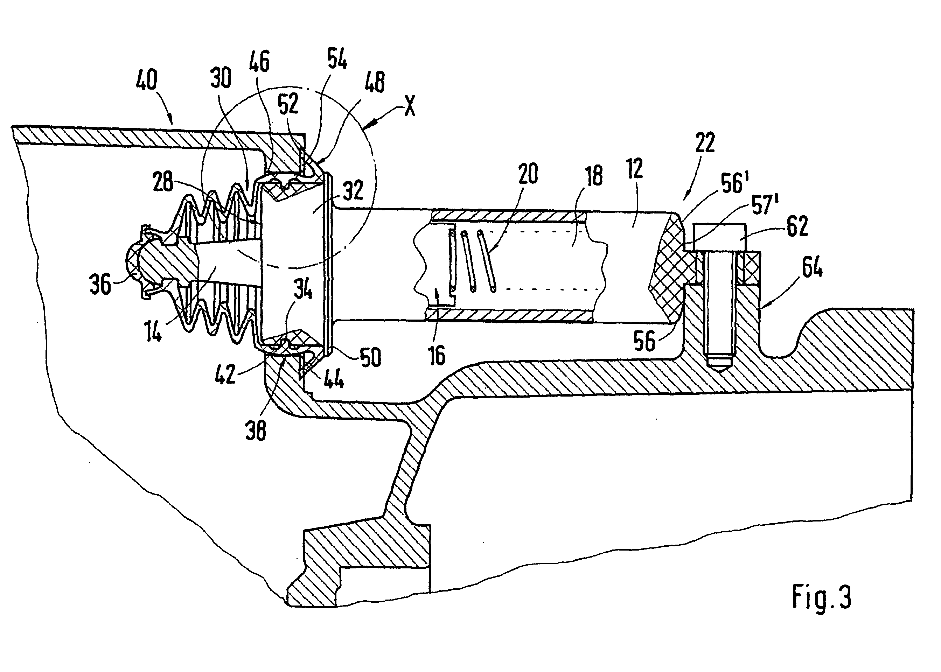

Links und rechts neben dem radialen Innensteg 34 sind auf der Innenseite des Ringabschnittes 38 zwei radial verlaufende Ringnuten 42 und 44 eingebracht, die für eine radiale Elastizität sorgen, wenn der Kupplungsnehmerzylinder 10 im Flanschbereich 32 mit Hilfe des Ringabschnittes 38 des Faltenbalgs 30 in einer Getriebegehäuseöffnung 46 radial geführt bzw. gelagert ist. Der Ringabschnitt 38 des Faltenbalgs 30 geht auf der äußeren Seite der Getriebegehäuseöffnung 46 in eine Ringdichtlippe 48 über, wobei der Faltenbalg 30 im Übergangsbereich vom Ringabschnitt 38 zur Ringdichtlippe 48 an einer axialen Anlagefläche 50 des Zylindergehäuses 12, die das Ende der Flanschfläche 32 bildet, abgestützt ist. Das Ende 52 der Ringdichtlippe 48 wiederum liegt im eingebauten Zustand (siehe Fig. 3) axial an der Aussenfläche 54 der Getriebegehäuseöffnung 46 an.

Am geschlossenen Ende 22 des Zylindergehäuses 12 ist ein an das Zylindergehäuse 12 angeformter Anschlag 55 vorgesehen, der mit einer schräg ausgebildeten Anlagefläche 56 und mit einer geraden Anschlagfläche 57 versehen ist, die für den Einbau des Kupplungsnehmerzylinders 10 im Getriebegehäuse 40, wie später noch näher erläutert, von Bedeutung sind. Am Zylinderboden ist weiterhin zentral ein Befestigungsauge 58 angeformt, durch das eine im Getriebegehäuse 40 in einer Gewindebohrung 60 befestigte Schraube 62 geführt ist. Die Gewindebohrung 60 ist in einem Vorsprung 64 des Getriebegehäuses 40 eingebracht, dessen eine Seitenfläche 65 als Gegenanschlag zur Anschlagfläche 57 des Anschlags 55 zur axialen Einspannung des Kupplungsnehmer-zylinders 10 ausgebildet ist.

Der Kupplungsnehmerzylinder 10 wird auf folgende Art und Weise am bzw. im Getriebegehäuse 40 montiert:

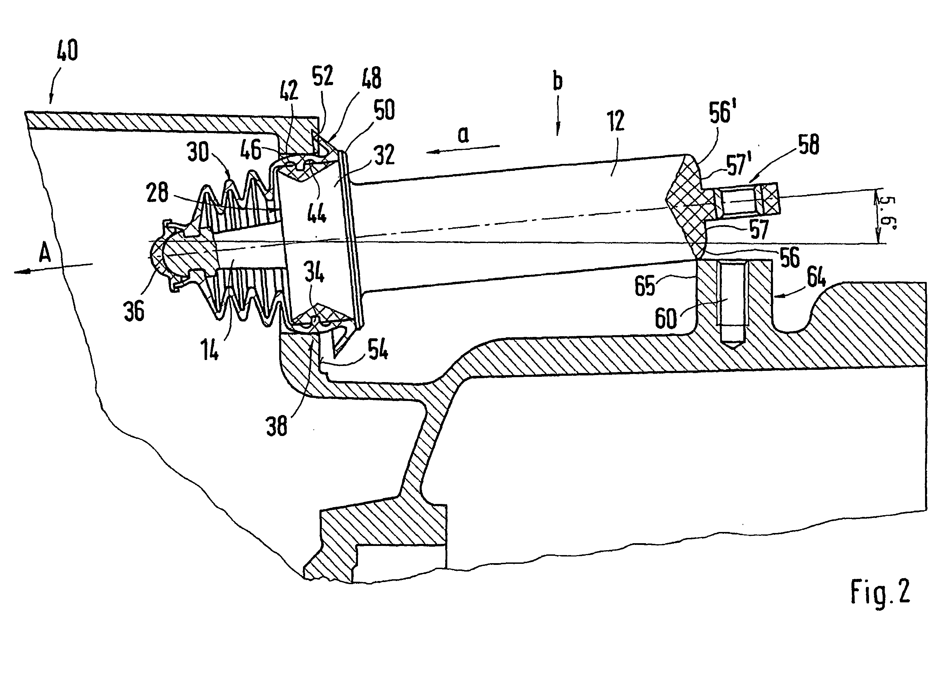

Wie in Fig. 2 dargestellt, wird als erstes der Kupplungsnehmerzylinder 10 mit der Stößelstange 14 bzw. mit dem Faltenbalg 30 schräg in die Getriebegehäuseöffnung 46 eingeführt, bis sich die Ringdichtlippe 48 axial an der Aussenfläche 54 der Getriebegehäuseöffnung 46 abstützt. Durch den torusförmig ausgebildeten Ringabschnitt 38 des Faltenbalgs 30 wird die schräge Einführung des Kupplungsnehmerzylinders 10 in die Getriebegehäuseöffnung 46 erleichtert, da die Anlagefläche zwischen der Außenseite des Ringabschnittes 38 und der Innenseite der Getriebegehäuseöffnung 46 nur klein ist. Der Abstand zwischen der Getriebegehäuseöffnung 46 und der linken Anschlagfläche 65 des Vorsprungs 64 ist so abgestimmt, dass durch leichtes Drücken des Kupplungsnehmerzylinders 10 in die mit dem Pfeil a dargestellte Einbaurichtung die schräge Anlagefläche 56 des Anschlags 55 an der linken Anschlagfläche 65 des Vorsprungs 64 zum Anliegen kommt. Danach kann der Kupplungsnehmerzylinder 10 lediglich durch ein seitliches Drücken in Richtung des Pfeils b in seine Endlageposition überführt werden, in der die gerade ausgebildete Anschlagfläche 57 mit der linken Anschlagfläche 65 des Vorsprungs 64 zum Anliegen kommt. Wenn das kugelige Ende der Stößelstange 14 in die dafür vorgesehene Mulde des Kupplungsausrückers eingreift, ist aufgrund der im Zylindergehäuse 12 angeordneten Druckfeder 20 eine selbsthaltende Endmontageposition erreicht, bei der der Kupplungsnehmerzylinder 10 eingespannt ist und nur noch durch die Verschraubung des Befestigungsauges 58 am Getriebegehäuse 40 gesichert werden muß. Durch die Federwirkung der sich axial an der Aussenfläche 54 abstützenden Ringdichtlippe 48 des Faltenbalgs 30 wird auch ohne Abstützung am Kupplungsausrücker eine selbsthaltende Endmontageposition erreicht. Die axialen Betriebskräfte des Kupplungsnehmerzylinders 10 können durch eine Spielpassung des Befestigungsauges 58 mit der Befestigungsschraube 62 vollständig über die axiale Anschlagfläche 57 abgestützt werden. Die Aufgabe des Kupplungsnehmerzylinders 10, den im Geberzylinder erzeugten Flüssigkeitsdruck als Kraft zum Betätigen des nicht dargestellten Kupplungsausrückers zu übertragen, ist allgemein bekannt und braucht daher nicht näher erläutert werden.

Auf der den Anschlag 55 gegenüberliegenden Seite ist in identischer Weise ein Anschlag 55' mit einer schrägen Anlagefläche 56' und einer geraden Anschlagfläche 57' vorgesehen. Damit kann der Kupplungsnehmerzylinder 10 wahlweise auf der rechten oder linken Getriebegehäuseseite eingebaut werden.

## Patentansprüche

1. Getriebegehäuse (40) mit einer hydraulischen Kupplungsbetätigungseinrichtung (10), insbesondere Kupplungsnehmerzylinder, die einen in einem Zylindergehäuse (12) geführten hydraulisch betätigbaren Kolben (16) aufweist, dessen axiale Bewegung über eine Stößelstange (14) auf einen Kupplungsausrücker übertragbar ist, wobei das einem Druckraum (18) gegenüberliegende Ende des Zylindergehäuses (12) durch eine elastische Manschette (30) abgeschlossen ist, durch die die mit dem Kolben (16) verbundene Stößelstange (14) hindurchgeführt ist, **dadurch gekennzeichnet, dass** das den Druckraum (18) begrenzende Ende (22) des Zylindergehäuses (12) axial am Getriebegehäuse (40) abgestützt und/oder durch Befestigungsmittel (62) gesichert ist, während das andere Ende (28) des Zylindergehäuses (12) innerhalb einer Öffnung (46) im Getriebegehäuse (40) radial geführt ist.

2. Getriebegehäuse nach Anspruch 1, **dadurch gekennzeichnet, dass** das durch die Öffnung (46) des Getriebegehäuses (40) geführte Ende (28) des Zylindergehäuses (12) als Flansch (32) für die Manschette (30) ausgebildet ist, so dass im eingebauten Zustand der auf dem Flansch (32) aufgesetzte Ringabschnitt (38) der Manschette (30) mit seiner Außenseite an der Innenwandung der Getriebegehäuseöffnung (46) anliegt.

3. Getriebegehäuse nach Anspruch 2, **dadurch gekennzeichnet, dass** der Ringabschnitt (38) der Manschette (30) nach außen hin gewölbt ausgebildet ist.

4. Getriebegehäuse nach Anspruch 2 oder 3, **dadurch gekennzeichnet, dass** auf der Innenseite des Ringabschnittes (38) radial angeordnete Ringnuten (42, 44) vorgesehen sind.

5. Getriebegehäuse nach einem der Ansprüche 2 bis 4, **dadurch gekennzeichnet, dass** die Manschette (30) eine radial ausgebildete und sich am Rand der Getriebegehäuseöffnung (46) axial abstützende Ringdichtlippe (48) aufweist.

6. Getriebegehäuse nach einem der vorhergehenden Ansprüche, **dadurch gekennzeichnet, dass** am Ende des Zylindergehäuses (12) ein Anschlag (55, 55') ausgebildet ist, der mit einer Anschlagfläche (57, 57') an einem Vorsprung (64) des Getriebegehäuses (40) zur axialen Abstützung des Kupplungsnehmerzylinders (10) anliegt.

7. Getriebegehäuse nach Anspruch 6, **dadurch gekennzeichnet, dass** der Anschlag (55, 55') eine schräge Anlagefläche (56, 56') aufweist, die als Rampenfläche zur erleichterten Montage (Einschwenken) des Zylindergehäuses (12) vorgesehen ist.

8. Getriebegehäuse nach einem der vorhergehenden Ansprüche, **dadurch gekennzeichnet, dass** am geschlossenen Ende (22) des Zylindergehäuses (12) ein Befestigungsauge (58) vorgesehen ist, durch das eine im Getriebegehäuse (40) befestigte Schraube (62) geführt ist.

9. Getriebegehäuse nach Anspruch 8, **dadurch gekennzeichnet, dass** zwischen Befestigungsauge (58) und Schraube (62) eine Spielpassung vorgesehen ist.

10. Kupplungsnehmerzylinder mit einem hydraulisch betätigbaren Kolben, der in einem Zylindergehäuse geführt und dessen axiale Bewegung über eine Stößelstange auf einen Kupplungsausrücker übertragbar ist, wobei das einem Druckraum gegenüberliegende Ende des Zylindergehäuses durch eine elastische Manschette abgeschlossen ist, durch die die mit dem Kolben verbundene Stößelstange hindurchgeführt ist, wobei an dem den Druckraum (18) begrenzende Ende (22) des Zylindergehäuses (12) ein Anschlag (55, 55') zur Abstützung an einem Getriebegehäuse (40) und Befestigungsmittel (58) zur Sicherung an einem Getriebegehäuse (40) vorgesehen sind, **dadurch gekennzeichnet, dass** das Zylindergehäuse (12) einen Flansch (32) aufweist, auf dem ein nach außen gewölbter Ringabschnitt (38) der Manschette (30) aufgesetzt ist, an dem sich eine Ringdichtlippe (48) anschließt, die im eingebauten Zustand des Kupplungsnehmerzylinders zur Abdichtung gegenüber einem Getriebegehäuse (40) dient.

11. Kupplungsnehmerzylinder nach Anspruch 10, **dadurch gekennzeichnet, dass** auf der Innenseite des Ringabschnittes (38) radial angeordnete Ringnuten (42, 44) vorgesehen sind, die der radialen Elastizität des Ringabschnittes (38) dienen.

12. Kupplungsnehmerzylinder nach Anspruch 10 oder 11, **dadurch gekennzeichnet, dass** ein auf der Innenseite der Manschette (30) angeformter radialer Innensteg (34) in eine in den Flansch (32) eingebrachte Ringnut eingreift.

## Claims

1. A gearbox housing (40) with a hydraulic clutch-activating device (10), especially a clutch slave cylinder, comprising a hydraulically activa.table piston (16) which is guided in a cylinder housing (12) and the axial movement of which is transmittable to a clutch release mechanism by a push rod (14), wherein the end of the cylinder housing (12) lying opposite a pressure chamber (18) is closed by a flexible sleeve (30), through which the push rod (14) connected to the piston (16) is guided, **characterised in that** the end (22) of the cylinder housing (12) bounding the pressure chamber (18) is axially supported on the gearbox housing (40) and/or secured by fixing means (62), while the other end (28) of the cylinder housing (12) is radially guided inside an opening (46) in the gearbox housing (40).

2. A gearbox housing according to claim 1, **characterised in that** the end (28) of the cylinder housing (12) guided through the opening (46) in the gearbox housing (40) is formed as a flange (32) for the sleeve (30) so that, in the mounted state, the annular portion (38) of the sleeve (30) is placed over the flange (32) and rests with its outer surface against the inner wall of the opening (46) in the gearbox housing.

3. A gearbox housing according to claim 2, **characterised in that** the annular portion (38) of the sleeve (30) is outwardly curved.

4. A gearbox housing according to claim 2 or 3, **characterised in that** radially arranged annular grooves (42, 44) are provided on the inside of the annular portion (38).

5. A gearbox housing according to any one of claims 2 to 4, **characterised in that** the sleeve (30) has a radially formed annular sealing lip (48) axially supported against the edge of the opening (46) in the gearbox housing.

6. A gearbox housing according to any one of the preceding claims, **characterised in that** a stop (55, 55') is formed at the end of the cylinder housing (12) and has a stop surface (57, 57') which rests against a projection (64) of the gearbox housing (40) to provide axial support for the clutch slave cylinder (10).

7. A gearbox housing according to claim 6, **characterised in that** the stop (55, 55') has an oblique contact surface (56, 56') provided as a ramp surface for easier mounting (pivoting) of the cylinder housing (12).

8. A gearbox housing according to any one of the preceding claims, **characterised in that** a fixing eye (58) is provided at the closed end (22) of the cylinder housing (12), and a screw (62), which is secured in the gearbox housing (40), is guided through the fixing eye (58).

9. A gearbox housing according to claim 8, **characterised in that** a clearance fit is provided between the fixing eye (58) and the screw (62).

10. A clutch slave cylinder comprising a hydraulically activatable piston which is guided in a cylinder housing and the axial movement of which is transmittable to a clutch release mechanism by a push rod, wherein the end of the cylinder housing lying opposite a pressure chamber is closed by a flexible sleeve, through which the push rod connected to the piston is guided, wherein, at the end (22) of the cylinder housing (12) bounding the pressure chamber (18), a stop (55, 55') is provided for supporting the cylinder housing (12) on a gearbox housing (40) and fixing means (58) are provided for securing it to a gearbox housing (40), **characterised in that** the cylinder housing (12) comprises a flange (32), over which is placed an outwardly curved annular portion (38) of the sleeve (30), to which is connected an annular sealing lip (48) which, in the mounted state of the clutch slave cylinder, serves to provide a seal in relation to a gearbox housing (40).

11. A clutch slave cylinder according to claim 10, **characterised in that** radially arranged annular grooves (42, 44) are provided on the inside of the annular portion (38) and impart radial flexibility to the annular portion (38).

12. A clutch slave cylinder according to claim 10 or 11, **characterised in that** an inner radial rib (34), formed on the inside of the sleeve (30), engages in an annular groove formed in the flange (32).

## Revendications

1. Carter de transmission (40) comportant un dispositif hydraulique d'actionnement d'embrayage (10), en particulier cylindre récepteur d'embrayage, qui comporte un piston (16) pouvant être actionné hydrauliquement, guidé dans un boîtier cylindrique (12), dont le mouvement axial peut être transmis, par une tige de poussoir (14), à un dispositif de désaccouplement, l'extrémité, opposée à la chambre de refoulement (18), du boîtier cylindrique (12), étant fermée par un manchon (30) élastique à travers lequel est guidée la tige de poussoir (14) reliée au piston (16), **caractérisé en ce que** l'extrémité (22), limitant la chambre de refoulement (18), du boîtier cylindrique (12), est soutenue axialement sur le carter de transmission (40) et/ou bloquée par des moyens de fixation (62), tandis que l'autre extrémité (28) du boîtier cylindrique (12) est guidée radialement à l'intérieur d'une ouverture (46) pratiquée dans le carter de transmission (40).

2. Carter de transmission selon la revendication 1, **caractérisé en ce que** l'extrémité (28), guidée à travers l'ouverture (46) du carter de transmission (40), du boîtier cylindrique (12), est réalisée comme bride (32) pour le manchon (30), de sorte qu'à l'état monté, le segment d'anneau (38), placé sur la bride (32), du manchon (30), s'applique par son côté extérieur contre la paroi intérieure de l'ouverture (46) du carter de transmission.

3. Carter de transmission selon la revendication 2, **caractérisé en ce que** le segment d'anneau (38) du manchon (30) est réalisé bombé vers l'extérieur.

4. Carter de transmission selon la revendication 2 ou 3, **caractérisé en ce que** des rainures annulaires (42, 44) sont prévues disposées radialement sur le côté intérieur du segment d'anneau (38).

5. Carter de transmission selon l'une des revendications 2 à 4, **caractérisé en ce que** le manchon (30) comporte une lèvre d'étanchéité annulaire (48) réalisée radialement et prenant appui axialement contre le bord de l'ouverture (46) du carter de transmission.

6. Carter de transmission selon l'une des revendications précédentes, **caractérisé en ce qu'**à l'extrémité du boîtier cylindrique (12) est réalisée une butée (55, 55') qui s'applique, par une surface de butée (57, 57'), contre une saillie (64) du carter de transmission (40), pour l'appui axial du cylindre récepteur d'embrayage (10).

7. Carter de transmission selon la revendication 6, **caractérisé en ce que** la butée (55, 55') présente une surface de contact (56, 56') oblique qui est prévue comme surface de rampe pour faciliter le montage (pivotement vers l'intérieur) du boîtier cylindrique (12).

8. Carter de transmission selon l'une des revendications précédentes, **caractérisé en ce qu'**à l'extrémité fermée (22) du boîtier cylindrique (12) est prévu un oeillet de fixation (58) à travers lequel est guidée une vis (62) fixée dans le carter de transmission (40).

9. Carter de transmission selon la revendication 8, **caractérisé en ce qu'**il est prévu un ajustement avec jeu entre l'oeillet de fixation (58) et la vis (62).

10. Cylindre récepteur d'embrayage avec un piston pouvant être actionné hydrauliquement qui est guidé dans un boîtier cylindrique et dont le mouvement axial peut être transmis par une tige de poussoir à un dispositif de débrayage, l'extrémité opposée à une chambre de refoulement du boîtier cylindrique étant fermée par un manchon élastique à travers lequel est guidée la tige de poussoir reliée au piston, à l'extrémité (22), limitant la chambre de refoulement (18), du boîtier cylindrique (12), étant prévus une butée (55, 55') destinée à s'appuyer contre un carter de transmission (40) et des moyens de fixation (58) pour la fixation sur un carter d'embrayage (40), **caractérisé en ce que** le boîtier cylindrique (12) comporte une bride (32) sur laquelle est placé un segment d'anneau (38), bombé vers l'extérieur, du manchon (30), auquel fait suite une lèvre d'étanchéité annulaire (48) qui, à l'état monté du cylindre capteur d'embrayage, sert à l'étanchéité par rapport à un carter de transmission (40).

11. Cylindre récepteur d'embrayage selon la revendication 10, **caractérisé en ce que** sur le côté intérieur du segment d'anneau (38) sont prévues des rainures annulaires (42, 43) disposées radialement qui servent à l'élasticité radiale du segment d'anneau (38).

12. Cylindre récepteur d'embrayage selon la revendication 10 ou 11, **caractérisé en ce qu'**une nervure intérieure (34) radiale, formée sur le côté intérieur du manchon (30), s'engage dans une rainure annulaire pratiquée dans la bride (32).
